# EUROPEAN PATENT APPLICATION

(11) **EP 2 669 634 A1**
(43) Date of publication of application: **04.12.2013**
(21) Application number: 12169967.2
(22) Date of filing: 30.05.2012
(51) Int. Cl.: G01C 21/36, G01S 3/14

(54) **A personal navigation system with a hearing device**

(71) Applicant: GN Store Nord A/S, 2750 Ballerup (DK)
(72) Inventor: Christensen, Søren, DK-4070 Kirke Hyllinge (DK)
(74) Representative: Zacco Denmark A/S

(57) **Abstract**

A personal navigation system is disclosed, comprising a hearing device configured to be head worn and having loudspeakers for emission of sound towards the ears of a user and accommodating an inertial measurement unit positioned for determining head yaw, when the user wears the hearing device in its intended operational position on the user's head, a GPS unit for determining the geographical position of the user, a sound generator connected for outputting audio signals to the loudspeakers, a pair of filters with a Head-Related Transfer Function connected in parallel between the sound generator and the loudspeakers for generation of a binaural acoustic sound signal emitted towards the eardrums of the user and perceived by the user as coming from a sound source positioned in a direction corresponding to the respective Head-Related Transfer Function, and a processor configured for determining a direction towards a desired geographical destination with relation to the determined geographical position and head yaw of the user, controlling the sound generator to output audio signals, and selecting a Head-Related Transfer function for the pair of filters corresponding to the determined direction towards the desired geographical destination so that the user hears sound arriving from the determined direction.

## Description

### FIELD OF THE INVENTION

A new personal navigation system is provided, comprising a GPS-unit and a hearing device having an inertial measurement unit for determination of orientation of a user's head.

### BACKGROUND OF THE INVENTION

Typically, present GPS-units guide a user towards a desired destination using visual and audible guiding indications. For example, present GPS-units typically displays a map on a display screen that includes the current position of the user, typically at the centre of the displayed map, and a suitable route drawn on the displayed map towards a desired destination accompanied by spoken instructions, such as "turn left at the next junction".

Present GPS-units typically determine orientation of a vehicle or person based on movement of the vehicle or person in question, in that orientation is determined as the direction defined by two successive positions along the path of movement. This principle works acceptable in a car, but is not convenient for a person walking. During walking, the user of the GPS-unit is often disoriented due to the delay caused by having to walk a certain distance before the GPS-unit determines orientation and adjusts the displayed map accordingly, and information on orientation is often lost again when the user stops to watch the map.

Also, the low velocity of the pedestrian causes some delay between issuance of a guiding instruction and arrival at the waypoint at which the guiding instruction should be executed, whereby the pedestrian has to consult the display of the GPS-unit quite often to be reminded what to do, which is perceived to be awkward and inconvenient.

### SUMMARY OF THE INVENTION

There is a need for an improved personal navigation system.

Thus, a personal navigation system is provided, comprising
a hearing device configured to be head worn and having loudspeakers for emission of sound towards the ears of a user and accommodating an inertial measurement unit positioned for determining head yaw, when the user wears the hearing device in its intended operational position on the user's head,
a GPS unit for determining the geographical position of the user,
a sound generator connected for outputting audio signals to the loudspeakers, and a pair of filters with a Head-Related Transfer Function connected in parallel between the sound generator and the loudspeakers for generation of a binaural acoustic sound signal emitted towards the eardrums of the user and perceived by the user as coming from a sound source positioned in a direction corresponding to the respective Head-Related Transfer Function.

Preferably, the personal navigation system further has a processor configured for determining a direction towards a desired geographical destination with relation to the determined geographical position and head yaw of the user,
controlling the sound generator to output audio signals, and
selecting a Head-Related Transfer function for the pair of filters corresponding to the determined direction towards the desired geographical destination so that the user perceives to hear sound arriving from a sound source located the determined direction.

The hearing device may be an Ear-Hook, In-Ear, On-Ear, Over-the-Ear, Behind-the-Neck, Helmet, Headguard, etc, headset, headphone, earphone, ear defender, earmuff, etc.

Further, the hearing device may be a binaural hearing aid, such as a BTE, a RIE, an ITE, an ITC, a CIC, etc, binaural hearing aid.

The hearing device may have a headband carrying two earphones. The headband is intended to be positioned over the top of the head of the user as is well-known from conventional headsets and headphones with one or two earphones. The inertial measurement unit may be accommodated in the headband of the hearing device.

The hearing device may have a neckband carrying two earphones. The neckband is intended to be positioned behind the neck of the user as is well-known from conventional neckband headsets and headphones with one or two earphones. The inertial measurement unit may be accommodated in the neckband of the hearing device.

The personal navigation system may also comprise a hand-held device, such as a GPS-unit, a smart phone, e.g. an Iphone, an Android phone, etc, e.g. with a GPS-unit, etc, interconnected with the hearing device.

The hearing device may comprise a data interface for transmission of data from the inertial measurement unit to the hand-held device.

The data interface may be a wired interface, e.g. a USB interface, or a wireless interface, such as a Bluetooth interface, e.g. a Bluetooth Low Energy interface.

The hearing device may comprise an audio interface for reception of an audio signal from the hand-held device.

The audio interface may be a wired interface or a wireless interface.

The data interface and the audio interface may be combined into a single interface, e.g. a USB interface, a Bluetooth interface, etc.

The hearing device may for example have a Bluetooth Low Energy data interface for exchange of head jaw values and control data between the hearing device and the hand-held device, and a wired audio interface for exchange of audio signals between the hearing device and the hand-held device.

Based on received head yaw values, the hand-held device can display maps on the display of the hand-held device in accordance with orientation of the head of the user as projected onto a horizontal plane, i.e. typically corresponding to the plane of the map. For example, the map may be displayed with the position of the user at a central position of the display, and the current head x-axis pointing upwards.

The user may use the user interface of the hand-held device to input information of a geographical position the user desires to visit in a way well-known from prior art hand-held GPS-units.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

The hand-held unit may display maps with a suggested route to the desired geographical destination as a supplement to the aural guidance provided by the personal navigation system. The hand-held device may further transmit spoken guiding instructions to the hearing device through the audio interface as is well-known in the art, supplementing the other audio signals provided by the personal navigation system.

The hearing device may have a microphone for reception of spoken commands by the user, and the processor may be configured for decoding of the spoken commands and for controlling the personal navigation system to perform the actions defined by the respective spoken commands.

The hearing device may comprise an ambient microphone for receiving ambient sound for user selectable transmission towards at least one of the ears of the user.

In the event that the hearing device provides a sound proof, or substantially, sound proof, transmission path for sound emitted by the loudspeaker(s) of the hearing device towards the ear(s) of the user, the user may be acoustically disconnected in an undesirable way from the surroundings. This may for example be dangerous when moving in traffic.

The hearing device may have a user interface, e.g. a push button, so that the user can switch the microphone on and off as desired thereby connecting or disconnecting the ambient microphone and one loudspeaker of the hearing device.

The hearing device may have a mixer with an input connected to an output of the ambient microphone and another input connected to an output of the hand-held device supplying an audio signal, and an output providing an audio signal that is a weighted combination of the two input audio signals.

The user input may further include means for user adjustment of the weights of the combination of the two input audio signals, such as a dial, or a push button for incremental adjustment.

The hearing device may have a threshold detector for determining the loudness of the ambient signal received by the ambient microphone, and the mixer may be configured for including the output of the ambient microphone signal in its output signal only when a certain threshold is exceeded by the loudness of the ambient signal.

Further ways of controlling audio signals from an ambient microphone and a voice microphone is disclosed in US 2011/0206217 A1.

The personal navigation system also has a GPS-unit for determining the geographical position of the user based on satellite signals in the well-known way. Hereby, the personal navigation system can provide the user's current geographical position based on the GPS-unit and the orientation of the user's head based on data from the hearing device.

The GPS-unit may be included in the inertial measurement unit of the hearing device for determining the geographical position of the user, when the user wears the hearing device in its intended operational position on the head, based on satellite signals in the well-known way. Hereby, the user's current position and orientation can be provided to the user based on data from the hearing device.

Alternatively, the GPS-unit may be included in a hand-held device that is interconnected with the hearing device. The hearing device may accommodate a GPS-antenna that is connected with the GPS-unit in the hand-held device, whereby reception of GPS-signals is improved in particular in urban areas where, presently, reception of GPS-signals by hand-held GPS-units can be difficult.

The inertial measurement unit may also have a magnetic compass for example in the form of a tri-axis magnetometer facilitating determination of head yaw with relation to the magnetic field of the earth, e.g. with relation to Magnetic North.

The personal navigation system comprises a sound generator connected for outputting audio signals to the loudspeakers via the pair of filters with a Head-Related Transfer Function and connected in parallel between the sound generator and the loudspeakers for generation of a binaural acoustic sound signal emitted towards the eardrums of the user. In this way, sound from the hearing device will be perceived by the user as coming from a sound source positioned in a direction corresponding to the respective Head-Related Transfer Function of the pair of filters.

The Head-Related Transfer Function of the pair of filters simulates the transmission of sound from a sound source located in a specific position to each of the two eardrums of the user.

The input to the user's auditory system consists of two signals, namely sound pressures at the left eardrum and sound pressures at the right eardrum, in the following termed the binaural sound signals. Thus, if sound pressures are accurately reproduced at the eardrums, the human auditory system will not be able to distinguish the reproduced sound pressures from sound pressures originated from a 3-dimensional spatial sound field.

It is not fully known how the human auditory system extracts information about distance and direction to a sound source, but it is known that the human auditory system uses a number of cues in this determination. Among the cues are spectral cues, reverberation cues, interaural time differences (ITD), interaural phase differences (IPD) and interaural level differences (ILD).

The transmission of a sound wave from a sound source positioned at a given direction and distance in relation to the left and right ears of the listener is described in terms of two transfer functions, one for the left ear and one for the right ear, that include any linear distortion, such as coloration, interaural time differences and interaural spectral differences. Such a set of two transfer functions, one for the left ear and one for the right ear, is called a Head-Related Transfer Function (HRTF). Each transfer function of the HRTF is defined as the ratio between a sound pressure p generated by a plane wave at a specific point in or close to the appertaining ear canal (p_{L} in the left ear canal and p_{R} in the right ear canal) in relation to a reference. The reference traditionally chosen is the sound pressure p_{I} that would have been generated by a plane wave at a position right in the middle of the head with the listener absent.

The HRTF changes with direction and distance of the sound source in relation to the ears of the listener. It is possible to measure the HRTF for any direction and distance and simulate the HRTF, e.g. electronically, e.g. by pair of filters. If such pair of filters are inserted in the signal path between a playback unit, such as a media player, e.g. an Ipod ®, and headphones used by a listener, the listener will achieve the perception that the sounds generated by the headphones originate from a sound source positioned at the distance and in the direction as defined by the HRTF simulated by the pair of filters, because of the approximately true reproduction of the sound pressures in the ears.

The HRTF contains all information relating to the sound transmission to the ears of the listener, including diffraction around the head, reflections from shoulders, reflections in the ear canal, etc., and therefore, due to the different anatomy of different individuals, the HRTFs are different for different individuals.

However, it is possible to provide general HRTFs which are sufficiently close to corresponding individual HRTFs for users in general to obtain the same sense of direction of arrival of a sound signal that has been filtered with pair of filters with the general HRTFs as of a sound signal that has been filtered with the corresponding individual HRTFs of the individual in question.

General HRTFs are disclosed in WO 93/22493.

For some directions of arrival, corresponding HRTFs may be constructed by approximation, for example by interpolating HRTFs corresponding to neighbouring angles of sound incidence, the interpolation being carried out as a weighted average of neighbouring HRTFs, or an approximated HRTF can be provided by adjustment of the linear phase of a neighbouring HTRF to obtain substantially the interaural time difference corresponding to the direction of arrival for which the approximated HRTF is intended.

For convenience, the pair of transfer functions of a pair of filters simulating an HRTF is also denoted a Head-Related Transfer Function even though the pair of filters can only approximate an HRTF.

Electronic simulation of the HRTFs by a pair of filters causes sound to be reproduced by the hearing device in such a way that the user perceives sound sources to be localized outside the head in specific directions. Thus, sound reproduced with pairs of filters with a HRTF makes it possible to guide the user in a certain direction.

For example, sound can be reproduced with an HRTF corresponding to the direction towards a desired geographical destination, so that the user perceives the sound source to be located and operated like a sonar beacon at the desired geographical destination. Thus, the personal navigation system utilizes a virtual sonar beacon located at the desired geographical destination to guide the user to the desired geographical destination. The virtual sonar beacon operates until the user reaches the geographical position or is otherwise aborted by the user.

In this way, the user is relieved from the task of watching a map in order to follow a suitable route towards the desired geographical destination.

The user is also relieved from listening to spoken commands intending to guide the user along a suitable route towards the desired geographical destination.

Further, the user is free to explore the surroundings and for example walk along certain streets as desired, e.g. act on impulse, while listening to sound perceived to come from the direction toward the desired geographical destination (also) to be visited, whereby the user is not restricted or urged to follow a specific route determined by the navigation system.

The sound generator may output audio signals representing any type of sound suitable for this purpose, such as speech, e.g. from an audio book, radio, etc, music, tone sequences, etc.

The sound generator may output a tone sequence, e.g. of the same frequency, or the frequency of the tones may be increased or decreased with distance to the desired geographical destination. Alternatively, or additionally, the repetition rate of the tones may be increased or decreased with distance to the desired geographical destination.

The user may for example decide to listen to a radio station while walking, and the sound generator generates audio signals originating from the desired radio station filtered by the HRTF in question, so that the user perceives to hear the desired radio station as a sonar beacon located at the desired geographical destination to be visited at some point in time.

The user may decide to follow a certain route determined and suggested by the personal navigation system, and in this case the processor controls the pair of filters so that the audio signals from the sound generator are filtered by HRTFs corresponding to desired directions along streets or other paths along the determined route. Changes in indicated directions will be experienced at junctions and may be indicated by increased loudness or pitch of the sound. Also in this case, the user is relieved from having to consult a map in order to be able to follow the determined route.

The personal navigation system may be operated without a visual display, and thus without displayed maps to be consulted by the user, rather the user specifies desired geographical destinations with spoken commands and receives aural guidance by sound emitted by the hearing device in such a way that the sound is perceived by the user as coming from the direction towards the desired geographical destination.

Thus, the personal navigation system may operate without a hand-held device, and rely on aural user interface using spoken commands and aural guidance, including spoken messages.

In this case, the personal navigation system comprises a hearing device configured to be head worn and having
loudspeakers for emission of sound towards the ears of a user and accommodating an inertial measurement unit positioned for determining head yaw, when the user wears the hearing device in its intended operational position on the user's head,
a GPS unit for determining the geographical position of the user,
a sound generator connected for outputting audio signals to the loudspeakers,
pair of filters with Head-Related Transfer Functions connected in parallel between the sound generator and the loudspeakers for generation of a binaural acoustic sound signal emitted towards the eardrums of the user and perceived by the user as coming from a sound source positioned in a direction corresponding to the respective Head-Related Transfer Function, and
a processor configured for
determining a direction towards a desired geographical destination with relation to the determined geographical position and head yaw of the user,
controlling the sound generator to output audio signals, and
selecting a Head-Related Transfer function for the pair of filters corresponding to the determined direction towards the desired geographical destination so that the user hears sound arriving from the determined direction.

In absence of GPS-signal, e.g. when buildings or terrain block the satellite signals, the personal navigation system may continue its operation relying on data from the inertial measurement unit of the hearing device utilising dead reckoning as is well-known from Inertial navigation systems in general. The processor uses information from gyros and accelerometers of the inertial measurement unit of the hearing device to calculate speed and direction of travel as a function of time and integrates to determine geographical positions of the user with the latest determined position based on GPS-signals as a starting point, until appropriate GPS-signal reception is resumed.

### BRIEF DESCRIPTION OF THE DRAWINGS

Below, the invention will be described in more detail with reference to the exemplary embodiments illustrated in the drawings, wherein
- Fig. 1: shows a hearing device with an inertial measurement unit,
- Fig. 2: shows (a) a head reference coordinate system and (b) head yaw,
- Fig. 3: shows (a) head pitch and (b) head roll,
- Fig. 4: is a block diagram of one embodiment of the new personal navigation system, and
- Fig. 5: illustrates one exemplary use of the new personal navigation system.

The new personal navigation system 10 will now be described more fully hereinafter with reference to the accompanying drawings, in which various embodiments are shown. The accompanying drawings are schematic and simplified for clarity, and they merely show details which are essential to the understanding of the new personal navigation system 10, while other details have been left out. The new personal navigation system 10 may be embodied in different forms not shown in the accompanying drawings and should not be construed as limited to the embodiments and examples set forth herein. Rather, these embodiments and examples are provided so that this disclosure will be thorough and complete, and will fully convey the scope of the invention to those skilled in the art.

Similar reference numerals refer to similar elements in the drawings.

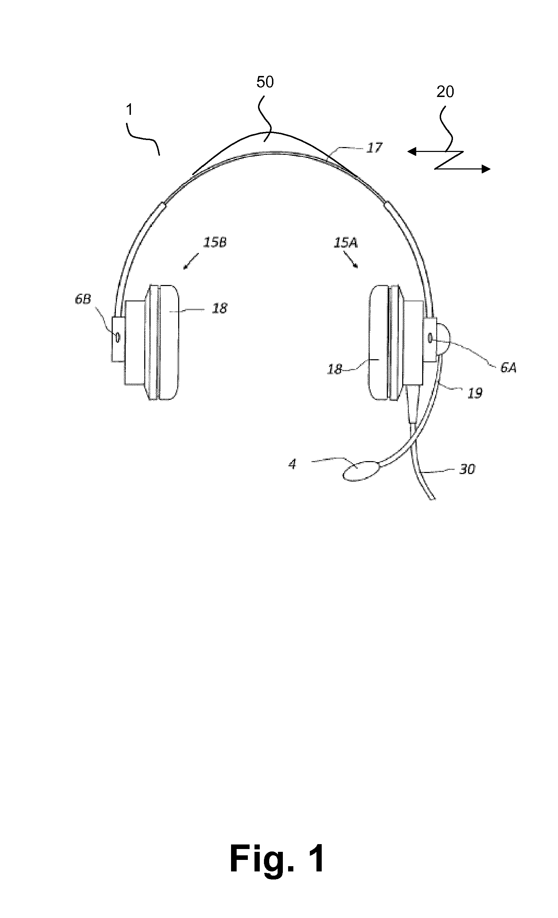

Fig. 1 shows a hearing device 12 of the personal navigation system 10, having a headband 17 carrying two earphones 15A, 15B similar to a conventional corded headset with two earphones 15A, 15B interconnected by a headband 17.

Each earphone 15A, 15B of the illustrated hearing device 12 comprises an ear pad 18 for enhancing the user comfort and blocking out ambient sounds during listening or two-way communication.

A microphone boom 19 with a voice microphone 4 at the free end extends from the first earphone 15A. The microphone 4 is used for picking up the user's voice e.g. during two-way communication via a mobile phone network and/or for reception of user commands to the personal navigation system 10.

The housing of the first earphone 15A comprises a first ambient microphone 6A and the housing of the second earphone 15B comprises a second ambient microphone 6B.

The ambient microphones 6A, 6B are provided for picking up ambient sounds, which the user can select to mix with the sound received from a hand-held device 14 (not shown), e.g. a mobile phone, a media player, such as an Ipod, a GPS-unit, a smart phone, a remote control for the hearing device 12, etc.

The user can select to mix ambient sounds picked up by the ambient microphones 6A, 6B with sound received from the hand-held device 14 (not shown) as already mentioned.

When mixed-in, sound from the first ambient microphone 6A is directed to the speaker of the first earphone 15A, and sound from the second ambient microphone 6B is directed to the speaker of the second earphone 15B.

A cord 30 extends from the first earphone 15A to the hand-held device 14 (not shown).

A Bluetooth transceiver in the earphone 15 is wirelessly connected by a Bluetooth link 20 to a Bluetooth transceiver in the hand-held device 14 (not shown).

The cord 30 may be used for transmission of audio signals from the microphones 4, 6A, 6B to the hand-held device 14 (not shown), while the Bluetooth network may be used for data transmission of data from the inertial measurement unit to the hand-held device 14 (not shown) and commands from the hand-held device 14 (not shown) to the hearing device 12, such as turn a selected microphone 4, 6A, 6B on or off.

A similar hearing device 12 may be provided without a Bluetooth transceiver so that the cord 30 is used for both transmission of audio signals and data signals; or, a similar hearing device 12 may be provided without a cord, so that a Bluetooth network is used for both transmission of audio signals and data signals.

A similar hearing device 12 may be provided without the microphone boom 19, whereby the microphone 4 is provided in a housing on the cord as is well-known from prior art headsets.

A similar hearing device 12 may be provided without the microphone boom 19 and microphone 4 functioning as a headphone instead of a headset.

An inertial measurement unit 50 is accommodated in a housing mounted on or integrated with the headband 17 and interconnected with components in the earphone housing 16 through wires running internally in the headband 17 between the inertial measurement unit 50 and the earphone 15.

The user interface of the hearing device 12 is not visible, but may include one or more push buttons, and/or one or more dials as is well-known from conventional headsets.

The orientation of the head of the user is defined as the orientation of a head reference coordinate system with relation to a reference coordinate system with a vertical axis and two horizontal axes at the current location of the user.

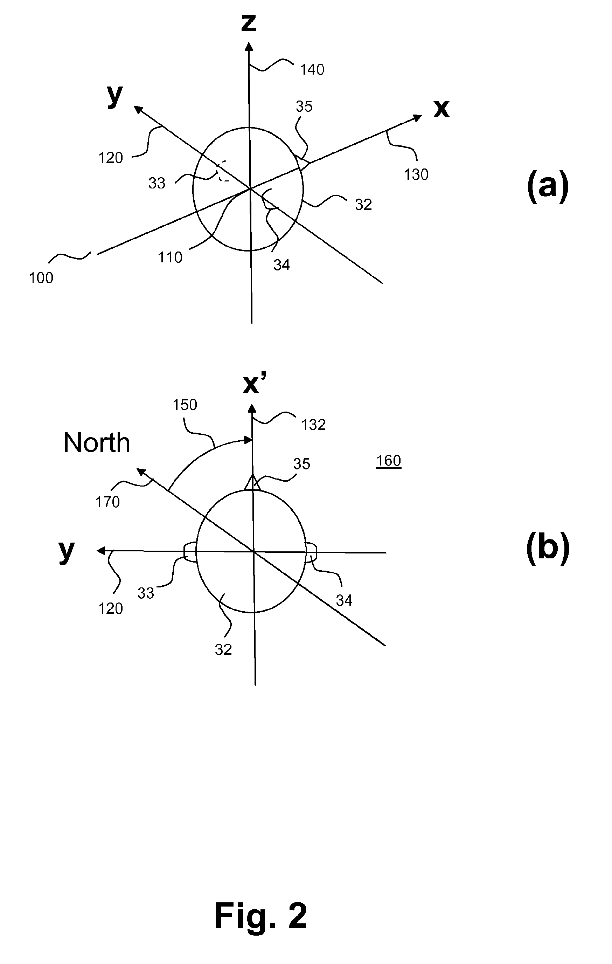

Fig. 2(a) shows a head reference coordinate system 100 that is defined with its centre 110 located at the centre of the user's head 32, which is defined as the midpoint 110 of a line 120 drawn between the respective centres of the eardrums (not shown) of the left and right ears 33, 34 of the user.

The x-axis 130 of the head reference coordinate system 100 is pointing ahead through a centre of the nose 35 of the user, its y-axis 112 is pointing towards the left ear 33 through the centre of the left eardrum (not shown), and its z-axis 140 is pointing upwards.

Fig. 2(b) illustrates the definition of head yaw 150. Head yaw 150 is the angle between the current x-axis' projection x' 132 onto a horizontal plane 160 at the location of the user, and a horizontal reference direction 170, such as Magnetic North or True North.

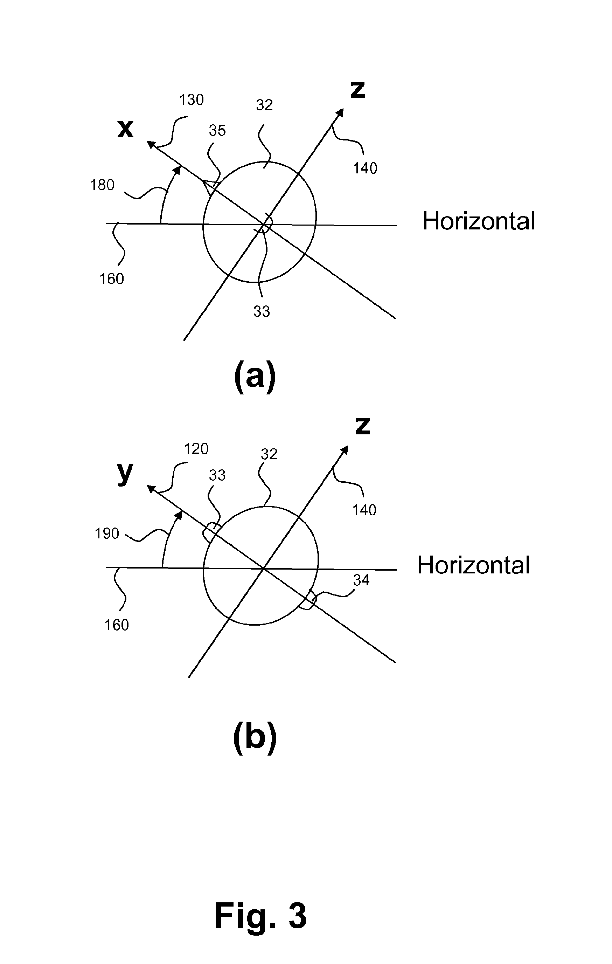

Fig. 3(a) illustrates the definition of head pitch 180. Head pitch 180 is the angle between the current x-axis 130 and the horizontal plane 160.

Fig. 3(b) illustrates the definition of head roll 190. Head roll 190 is the angle between the y-axis and the horizontal plane.

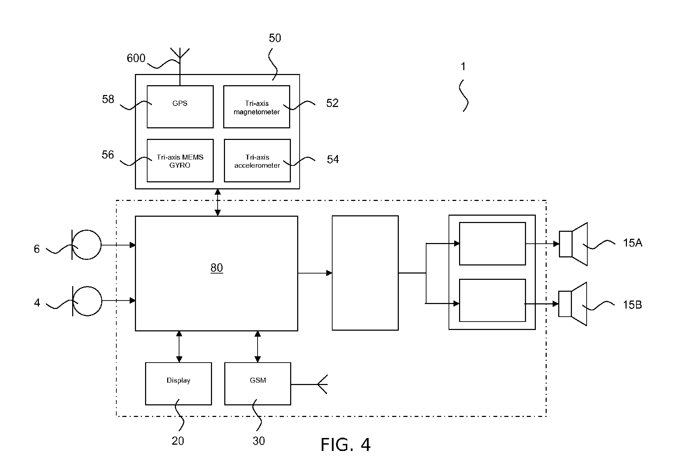

Fig. 4 shows a block diagram of a new personal navigation system 10 comprising a hearing device 12 and a hand-held device 14.

The various components of the system 12 may be distributed otherwise between the hearing device 12 and the hand-held device 14. For example, the hand-held device 14 may accommodate the GPS-receiver 58. Another system 12 may not have a hand-held device 14 so that all the components of the system are accommodated in the hearing device 12. The system 12 without a hand-held device 14 does not have a display, and speech synthesis is used to issue messages and instructions to the user and speech recognition is used to receive spoken commands from the user.

The illustrated personal navigation system 10 comprises a hearing device 12 comprising electronic components including two loudspeakers 15A, 15B for emission of sound towards the ears of the user (not shown), when the hearing device 12 is worn by the user in its intended operational position on the user's head.

It should be noted that in addition to the hearing device 12 shown in Fig, 1, the hearing device 12 may be of any known type including an Ear-Hook, In-Ear, On-Ear, Over-the-Ear, Behind-the-Neck, Helmet, Headguard, etc, headset, headphone, earphone, ear defenders, earmuffs, etc.

Further, the hearing device 12 may be a binaural hearing aid, such as a BTE, a RIE, an ITE, an ITC, a CIC, etc, binaural hearing aid.

The illustrated hearing device 12 has a voice microphone 4 e.g. accommodated in an earphone housing or provided at the free end of a microphone boom mounted to an earphone housing.

The hearing device 12 further has one or two ambient microphones 6A, 6B, e.g. at each ear, for picking up ambient sounds.

The hearing device 12 has an inertial measurement unit 50 positioned for determining head yaw, head pitch, and head roll, when the user wears the hearing device 12 in its intended operational position on the user's head.

The illustrated inertial measurement unit 50 has tri-axis MEMS gyros 56 that provide information on head yaw, head pitch, and head roll in addition to tri-axis accelerometers 54 that provide information on three dimensional displacement of the hearing device 12.

The inertial measurement unit 50 also has a GPS-unit 58 for determining the geographical position of the user, when the user wears the hearing device 12 in its intended operational position on the head, based on satellite signals in the well-known way. Hereby, the user's current position and orientation can be provided to the user based on data from the hearing device 12.

Optionally, the hearing device 12 accommodates a GPS-antenna configured for reception of GPS-signals, whereby reception of GPS-signals is improved in particular in urban areas where, presently, reception of GPS-signals can be difficult.

In a hearing device 12 without the GPS-unit 58, the hearing device 12 has an interface for connection of the GPS-antenna with an external GPS-unit, e.g. a hand-held GPS-unit, whereby reception of GPS-signals by the hand-held GPS-unit is improved in particular in urban areas where, presently, reception of GPS-signals by hand-held GPS-units can be difficult.

The illustrated inertial measurement unit 50 also has a magnetic compass in the form of a tri-axis magnetometer 52 facilitating determination of head yaw with relation to the magnetic field of the earth, e.g. with relation to Magnetic North.

The hand-held device 14 of the personal navigation system 10 has a processor 80 with input/output ports connected to the sensors of the inertial measurement unit 50, and configured for determining and outputting values for head yaw, head pitch, and head roll, when the user wears the hearing device 12 in its intended operational position on the user's head.

The processor 80 may further have inputs connected to accelerometers of the inertial measurement unit, and configured for determining and outputting values for displacement in one, two or three dimensions of the user when the user wears the hearing device 12 in its intended operational position on the user's head, for example to be used for dead reckoning in the event that GPS-signals are lost.

Thus, the illustrated personal navigation system 10 is equipped with a complete attitude heading reference system (AHRS) for determination of the orientation of the user's head that has MEMS gyroscopes, accelerometers and magnetometers on all three axes. The processor provides digital values of the head yaw, head pitch, and head roll based on the sensor data.

The hearing device 12 has a data interface 20 for transmission of data from the inertial measurement unit to the processor 80 of the hand-held device 14, e.g. a smart phone with corresponding data interface. The data interface 20 is a Bluetooth Low Energy interface.

The hearing device 12 further has a conventional wired audio interface for audio signals from the voice microphone 4, and for audio signals to the loudspeakers 15A, 15B for interconnection with the hand-held device 14 with corresponding audio interface.

This combination of a low power wireless interface for data communication and a wired interface for audio signals provides a superior combination of high quality sound reproduction and low power consumption of the personal navigation system 10.

The hearing device 12 has a user interface 21, e.g. with push buttons and dials as is well-known from conventional headsets, for user control and adjustment of the hearing device 12 and possibly the hand-held device 14 interconnected with the hearing device 12, e.g. for selection of media to be played.

The hand-held device 14 receives head yaw from the inertial measurement unit of the hearing device 12 through the Bluetooth Low Energy wireless interface. With this information, the hand-held device 14 can display maps on its display in accordance with orientation of the head of the user as projected onto a horizontal plane, i.e. typically corresponding to the plane of the map. For example, the map may automatically be displayed with the position of the user at a central position of the display, and the current head x-axis pointing upwards.

The user may use the user interface of the hand-held device 14 to input information of a geographical position the user desires to visit in a way well-known from prior art hand-held GPS-units.

The hand-held device 14 may display maps with a suggested route to the desired geographical destination as a supplement to the aural guidance provided through the hearing device 12.

The hand-held device 14 may further transmit spoken guiding instructions to the hearing device 12 through the audio interface 30 as is well-known in the art, supplementing the other audio signals provided to the hearing device 12.

In addition, the microphone of hearing device 12 may be used for reception of spoken commands by the user, and the processor 80 may be configured for speech recognition, i.e. decoding of the spoken commands, and for controlling the personal navigation system 10 to perform actions defined by respective spoken commands.

The hand-held device 14 filters the output of a sound generator of the hand-held device 14 with a pair of filters with an HRTF into two output audio signals, one for the left ear and one for the right ear, corresponding to the filtering of the HRTF of a direction in which the user should travel in order to visit a desired geographical destination.

This filtering process causes sound reproduced by the hearing device 12 to be perceived by the user as coming from a sound source localized outside the head from a direction corresponding to the HRTF in question, i.e. from a virtual sonar beacon located at the desired geographical destination.

In this way, the user is relieved from the task of watching a map in order to follow a suitable route towards the desired geographical destination.

The user is also relieved from listening to spoken commands intending to guide the user along a suitable route towards the desired geographical destination.

Further, the user is free to explore the surroundings and for example walk along certain streets as desired, e.g. act on impulse, while listening to sound perceived to come from the direction toward the desired geographical destination (also) to be visited, whereby the user is not restricted to follow a specific route determined by the personal navigation system 10.

The sound generator may output audio signals representing any type of sound suitable for this purpose, such as speech, e.g. from an audio book, radio, etc, music, tone sequences, etc.

The user may for example decide to listen to a radio station while walking, and the sound generator generates audio signals reproducing the signals originating from the desired radio station filtered by pair of filters with the HRTFs in question, so that the user perceives to hear the desired music from the direction towards the desired geographical destination to be visited at some point in time.

At some point in time, the user may decide to follow a certain route determined and suggested by the personal navigation system 10, and in this case the processor controls the HRTF filters so that the audio signals from the sound generator are filtered by HRTFs corresponding to desired directions along streets or other paths along the determined route. Changes in indicated directions will be experienced at junctions and may be indicated by increased loudness or pitch of the sound. Also in this case, the user is relieved from having to visually consult a map in order to be able to follow the determined route.

In the event that the processor controls the sound generator to output a tone sequence, e.g. of the same frequency, the frequency of the tones may be increased or decreased with distance to the desired geographical destination. Alternatively, or additionally, the repetition rate of the tones may be increased or decreased with distance to the desired geographical destination.

The personal navigation system 10 may be operated without using the visual display, i.e. without the user consulting displayed maps, rather the user specifies desired geographical destinations with spoken commands and receives aural guidance by sound emitted by the hearing device 12 in such a way that the sound is perceived by the user as coming from the direction towards the desired geographical destination.

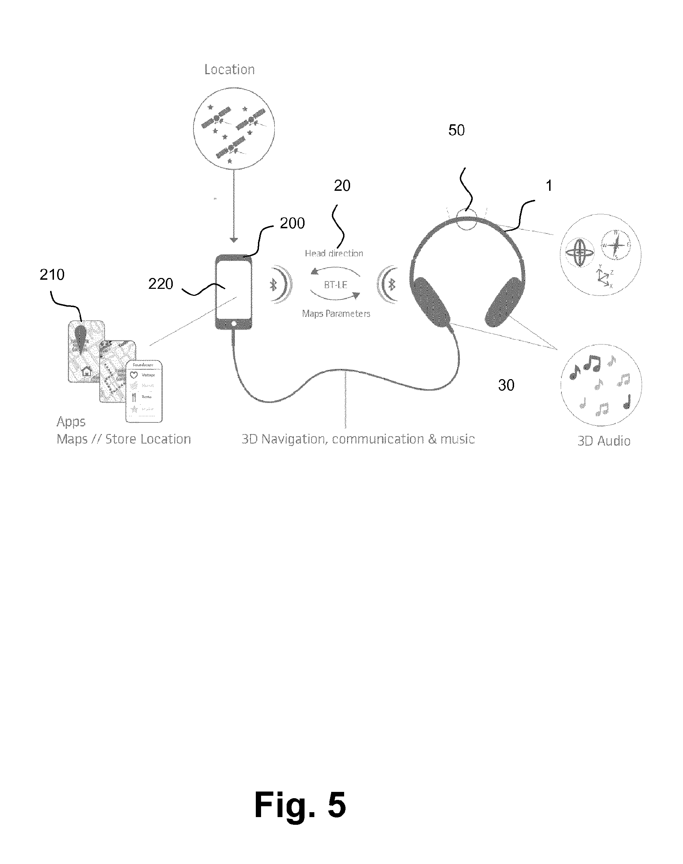

Fig. 5 illustrates the configuration and operation of an example of the new personal navigation system 10 shown in Fig. 4, with the hearing device 12 together with a hand-held device 14, which in the illustrated example is a smart phone 200, e.g. an Iphone, an Android phone, etc, with a personal navigation app containing instructions for the processor of the smart phone to perform the operations of the processor 80 of the personal navigation system 10 and of the pair of filters with an HRTF. The hearing device 12 is connected to the smart phone 200 with a chord 30 providing a wired audio interface between the two units 10, 200 for transmission of speech and music from the smart phone 200 to the hearing device 12, and speech from the voice microphone 4 (not shown) to the smart phone 200 as is well-known in the art.

As indicated in Fig. 5 by the various exemplary GPS-images 210 displayed on the smart phone display 220, the personal navigation app is executed by the smart phone in addition to other tasks that the user selects to be performed simultaneously by the smart phone 200, such as playing music, and performing telephone calls when required.

The personal navigation app configures the smart phone 200 for data communication with the hearing device 12 through a Bluetooth Low Energy wireless interface 20 available in the smart phone 200 and the hearing device 12, e.g. for reception of head yaw from the inertial measurement unit 50 of the hearing device 12. In this way, the personal navigation app can control display of maps on the display of the smart phone 200 in accordance with orientation of the head of the user as projected onto a horizontal plane, i.e. typically corresponding to the plane of the map. For example, the map may be displayed with the position of the user at a central position of the display, and the head x-axis pointing upwards.

The personal navigation system 10 operates to position a virtual sonar beacon at the desired geographical destination, whereby a guiding sound signal is transmitted to the ears of the user that is perceived by the user to arrive from a certain direction in which the user should travel in order to visit a desired geographical destination previously specified by the user. The guiding sound is generated by a sound generator of the smart phone 200, and the output of the sound generator is filtered in parallel with the pair of filters with an HRTF so that an audio signal for the left ear and an audio signal for the right ear are generated. The filter functions of the two filters approximate the HRTF corresponding to the direction in which the user should travel.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

## Claims

1. A personal navigation system comprising
a hearing device configured to be head worn and having loudspeakers for emission of sound towards the ears of a user and accommodating an inertial measurement unit positioned for determining head yaw, when the user wears the hearing device in its intended operational position on the user's head,
a GPS unit for determining the geographical position of the user,
a sound generator connected for outputting audio signals to the loudspeakers,
a pair of filters with a Head-Related Transfer Function connected in parallel between the sound generator and the loudspeakers for generation of a binaural acoustic sound signal emitted towards the eardrums of the user and perceived by the user as coming from a sound source positioned in a direction corresponding to the respective Head-Related Transfer Function, and
a processor configured for
determining a direction towards a desired geographical destination with relation to the determined geographical position and head yaw of the user,
controlling the sound generator to output audio signals, and
selecting a Head-Related Transfer function for the pair of filters corresponding to the determined direction towards the desired geographical destination so that the user hears sound arriving from the determined direction.

2. A personal navigation system according to claim 1, wherein
the desired geographical destination constitutes a desired geographical destination specified by the user.

3. A personal navigation system according to claim 1 or 2, wherein
the desired geographical destination constitutes a waypoint along a route to a desired geographical destination specified by the user.

4. A navigation system according to any of the previous claims, comprising
a user interface configured for reception of spoken user commands.

5. A navigation system according to any of the previous claims, comprising
a hand-held device interconnected with the hearing device, and wherein
the hand-held device accommodates the sound generator and the pair of filters with the Head-Related Transfer function.

6. A navigation system according to claim 4 and 5, wherein
the hand-held device accommodates the user interface configured for reception of spoken user commands.

7. A navigation system according to claim 5 or 6, wherein
the hand-held device comprises a display, and a processor configured to display a map on the display with an indication of the determined geographical position and head yaw of the user.

8. A navigation system according to any of claims 5-7, wherein
the hand-held computer accommodates the GPS unit.

9. A navigation system according to any of claims 5-8, comprising a wireless connection for communicating signals between the hand-held device and the hearing device.

10. A navigation system according to any of claims 5-9, comprising a wired connection for communicating signals between the hand-held computer and the hearing device.

11. A navigation system according to claim 10, wherein audio signals are transmitted from the hand-held computer to the hearing device with the wired connection, and wherein sensor data is transmitted from the hearing device to the hand-held computer with the wireless connection.

12. A personal navigation system according to any of the preceding claims, wherein the sound generator is configured to output audio signals representing at least one of the types of sound selected from the group consisting of speech, music, and tone sequence.

13. A personal navigation system according to any of the preceding claims, wherein the processor is configured to, in absence of GPS-signal, to calculate the geographical position of the user utilising dead reckoning based on sensor data from the inertial measurement unit of the hearing device.
